# EUROPÄISCHE PATENTSCHRIFT

(11) **EP 3 926 148 B1**
(45) Veröffentlichungstag und Bekanntmachung des Hinweises auf die Patenterteilung: **27.09.2023**
(21) Anmeldenummer: 21179836.8
(22) Anmeldetag: 16.06.2021
(51) Int. Cl.: F01D 25/24, F01D 17/10, F01D 17/16

(54) **ABGASTURBOLADER-ANORDNUNG MIT EINEM ABGASTURBOLADER UND MIT EINEM AKTUATOR**
EXHAUST GAS TURBOCHARGER ARRANGEMENT WITH AN EXHAUST GAS TURBOCHARGER AND WITH AN ACTUATOR
AGENCEMENT DU TURBOCOMPRESSEUR À GAZ D'ÉCHAPPEMENT DOTÉ D'UN TURBOCOMPRESSEUR À GAZ D'ÉCHAPPEMENT ET D'UN ACTIONNEUR

(30) Priorität: 19.06.2020 DE 102020207638
(43) Veröffentlichungstag der Anmeldung: 22.12.2021
(73) Patentinhaber: MAHLE International GmbH, 70376 Stuttgart (DE)
(72) Erfinder: NIEKAMP, Peer, 71397 Leutenbach (DE)
(74) Vertreter: BRP Renaud & Partner mbB Rechtsanwälte Patentanwälte Steuerberater

(56) Entgegenhaltungen:
- EP-A1- 1 186 781
- EP-A2- 2 499 340
- WO-A1-2005/061903
- WO-A1-2008/023033
- DE-B3-102006 040 667

## Beschreibung

Die Erfindung betrifft eine Abgasturbolader-Anordnung mit einem Abgasturbolader und mit einem Aktuator. Die Erfindung betrifft ferner eine Brennkraftmaschine mit einer solchen Abgasturbolader-Anordnung sowie ein Kraftfahrzeug mit einer solchen Brennkraftmaschine.

Moderne Abgasturbolader für Brennkraftmaschinen von Kraftfahrzeugen weisen oftmals eine Turbine auf, die zur Wirkungsgradverbesserung des Abgasturboladers eine sogenannte variable Turbinengeometrie mit verstellbaren Leitschaufeln oder eine Wastegate-Einrichtung mit einem verstellbaren Wastegate-Ventil umfasst. Die Verstellung erfolgt dabei oftmals mithilfe eines elektrischen Aktuators, der separat zum eigentlichen Abgasturbolader ausgebildet ist und mit seinem Aquatorgehäuse am Turboladergehäuse befestigt werden kann. Um den Aktuator zu Wartungs- oder Reparaturzwecken vom Abgasturbolader entfernen zu können, erfolgt die Befestigung des Aktuatorgehäuses am Turboladergehäuse typischerweise mittels lösbarer Schraubverbindungen.

Herkömmliche Abgasturbolader-Anordnungen sind dabei in der Regel mit Schraubverbindungen ausgestattet, bei welchen eine Metallschraube durch metallische Zwischenlagen - diese werden typischerweise durch das Aktuator Gehäuse gebildet - in ein am Abgasturbolader vorgesehenes metallisches Gewinde eingeschraubt wird. Alternativ dazu ist es auch üblich, ein Aktuatorgehäuse aus Kunststoff zu verwenden, welches mittels eines Kunststoffflansches über selbstfurchende Metallschraube verschraubt wird. Für die Metallschraube ist dabei im Aktuatorgehäuse eine Durchgangsöffnung vorgesehen, die mittels einer Metallbuchse verstärkt werden kann. Je nach Befestigungsrichtung der Metallschraube kann es sich bei der Metallbuchse um eine Durchgangsbuchse ohne Gewinde oder um eine Gewindebuchse handeln.

Vor diesem Hintergrund offenbart die DE 10 2006 040667 B3 eine Abgasturbolader-Anordnung mit einem Abgasturbolader. Der Abgasturbolader umfasst ein Turboladergehäuse. Die Abgasturbolader-Anordnung umfasst einen Aktuator zum Verstellen einer variablen Turbinengeometrien oder/und einer Wastegate-Einrichtung der Turbine. Der Aktuator umfasst außerdem ein Aktuatorgehäuse. Ferner umfasst die Abgasturbolader-Anordnung eine Schraubverbindung zum lösbaren Befestigen des Aktuatorgehäuses an einem Gehäuseflansch des Turboladergehäuses. Die Schraubverbindung umfasst eine im Aktuatorgehäuse vorgesehene Durchgangsöffnung, die durch Kunststoffmaterial begrenzt ist. Die Dokumente WO2008/023033 A1, WO2005/061903 A1, EP1186781 A1 und EP2499340 A2 offenbaren alternative Passschrauben-Verbindungen.

Es ist eine Aufgabe der vorliegenden Erfindung, eine Abgasturbolader-Anordnung mit Schraubverbindungen zu schaffen, die sich durch eine vereinfachte Herstellung und somit auch durch geringere Herstellungskosten auszeichnet.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, im Aktuatorgehäuse des Aktuators Kunststoff-Durchgangsöffnungen vorzusehen und im Gehäuseflansch des Turboladergehäuses ein metallisches Gewinde anzuordnen. Wird nun für die Schraubverbindung zwischen Aktuatorgehäuse und Gehäuseflansch erfindungsgemäß eine Passschraube verwendet, so kann mittels der Passschraube das Aktuatorgehäuse zwischen den Schraubenkopf der Passschraube und den Gehäuseflansch geklemmt werden. Die Ausführung als Passschraube stellt dabei sicher, dass das Aktuatorgehäuse quer zur Schraubrichtung der Passschraube nur in geringem Maße bewegt werden kann. Auf diese Weise wird eine hochgenaue Positionierung des Aktuatorgehäuses relativ zum Turboladergehäuse erzielt. Bei der hier vorgestellten erfindungsgemäßen Lösung kann zudem auf die Verwendung von aus herkömmlichen Schraubverbindungen für Turbolader-Anordnungen bekannten Buchsen im Aktuatorgehäuse entfallen, wodurch der Aufbau der Abgasturbolader-Anordnung vereinfacht wird. Damit einher gehen reduzierte Herstellungskosten.

Eine erfindungsgemäße Abgasturbolader-Anordnung umfasst einen Abgasturbolader mit einem Verdichter und mit einer Turbine. Der Abgasturbolader umfasst ein Turboladergehäuse, welches insbesondere ein Verdichtergehäuse, ein Turbinengehäuse sowie ein Lagergehäuse umfassen kann. Die Abgasturbolader-Anordnung umfast ferner einen Aktuator zum Verstellen einer variablen Turbinengeometrien oder/und einer Wastegate-Einrichtung der Turbine. Der Aktuator umfasst außerdem ein Aktuatorgehäuse. Ferner umfasst die Abgasturbolader-Anordnung wenigstens eine Schraubverbindung zum lösbaren Befestigen des Aktuatorgehäuses an einem Gehäuseflansch des Turboladergehäuses. Die wenigstens eine Schraubverbindung umfasst eine im Aktuatorgehäuse vorgesehene Durchgangsöffnung, die durch Kunststoffmaterial begrenzt ist. Die wenigstens eine Schraubverbindung umfasst ferner eine im Gehäuseflansch vorgesehen Ausnehmung, welche umfangsseitig von einem Innengewinde aus einem Metall begrenzt ist. Die wenigstens eine Schraubverbindung umfasst ferner eine Passschraube, die einen Schraubenkörper aufweist, der entlang einer axialen Richtung in einen Schraubenkopf übergeht.

Der Schraubenkörper der Passschraube weist einen axial vom Schraubenkopf abgewandten ersten axialen Körperabschnitt mit einem komplementär zum Innengewinde der Ausnehmung ausgebildeten Außengewinde auf. Ferner weist der Schraubenkörper einen in der axialen Richtung zwischen dem Schraubenkopf und dem ersten axialen Körperabschnitt angeordneten zweiten axialen Körperabschnitt auf. Dabei ist ein erster Körperabschnittsdurchmesser des ersten Körperabschnitts kleiner als ein zweiter Körperabschnittsdurchmesser des zweiten Körperabschnitts. Außerdem ist ein Kopfdurchmesser des Schraubenkopfs größer als der zweite Körperabschnittsdurchmesser. Erfindungsgemäß durchgreift die Passschraube die Durchgangsöffnung des Aktuatorgehäuses mit dem ersten Körperabschnitt und greift mit dem Außengewinde des zweiten Körperabschnitts in das Innengewinde der Ausnehmung ein, so dass das Aktuatorgehäuse zwischen den Gehäuseflansch des Turboladergehäuses und den Schraubenkopf der Passschraube geklemmt wird. Erfindungsgemäß bildet der zweite Körperabschnitt der Passschraube mit dem die Durchgangsöffnung des Aktuatorgehäuses umfangsseitig begrenzenden Kunststoffmaterial eine Presspassung aus. Auf diese Weise wird eine Bewegung des Aktuatorgehäuses quer zur axialen Richtung der Passschraube, also entlang der radialen Richtung verhindert. Somit wird eine hohe Positioniergenauigkeit des Aktuatorgehäuse relativ zum Turboladergehäuse erzielt.

Die axiale Richtung wird zweckmäßig durch die Ausrichtung der Mittellängsachse des Schraubenkörpers im montierten Zustand der Passschraube festgelegt, d.h. die Mittellängsachse erstreckt sich in axialer Richtung. Eine radiale Richtung erstreckt sich senkrecht von der Mittellängsachse weg. Alle im Zusammenhang mit der vorliegenden Erfindung beschriebenen Durchmesser werden zweckmäßig entlang der radialen Richtung der montierten Passschraube gemessen, alle Längen entlang der axialen Richtung. Eine Umfangsrichtung erstreckt sich senkrecht sowohl zur axialen Richtung als auch zur radialen Richtung und läuft um die Mittellängsachse um.

Gemäß einer bevorzugten Ausführungsform weist eine zweite Abschnittslänge des zweiten Körperabschnitts einen Wert auf, der höchstens so groß wie der Wert einer Durchgangsöffnungslänge der Durchgangsöffnung ist. Die zweite Abschnittslänge wird dabei entlang der axialen Richtung gemessen. Besonders bevorzugt ist der Wert der zweiten Abschnittslänge um höchstens 0,3, vorzugsweise um höchstens 0,1 mm, kleiner als der Wert der Durchgangsöffnungslänge.

Besonders bevorzugt ist am Außenumfang des zweiten Körperabschnitts eine Rippenstruktur, vorzugsweise mit mehreren sich axial erstreckenden Längsrippen, oder eine tribulare Struktur, ausgebildet. Diese Rippenstruktur erleichtert die Ausbildung der gewünschten Presspassung und ist darüber hinaus einfach herzustellen und somit kostengünstig.

Gemäß einer vorteilhaften Weiterbildung ist der zweite Körperabschnittsdurchmesser größer gewählt als ein Ausnehmungsdurchmesser der Ausnehmung. Auf diese Weise wirkt der zweite Körperabschnitt als axialer Anschlag. Außerdem wird beim Einschrauben der Passschraube eine Vorspannkraft erzeugt, mittels welcher die Passschraube besonders stabil in der Ausnehmung gehalten und somit am Gehäuseflansch fixiert werden kann.

Zweckmäßig ist der Kopfdurchmesser größer gewählt als ein Öffnungsdurchmesser der Durchgangsöffnung. Somit ist sichergestellt, dass das Aktuatorgehäuse stabil zwischen den Schraubenkopf und den Gehäuseflansch geklemmt werden kann.

Gemäß einer vorteilhaften Weiterbildung umfasst die Ausnehmung eine radiale Stufe, so dass der Durchmesser zur Oberfläche des Gehäuseflansches hin vergrößert ist. Somit wird die mittels der Presspassung zwischen Aktuatorgehäuse und Passschraube bewirkte Positioniergenauigkeit senkrecht zur axialen Richtung auf das Turboladergehäuse übertragen.

Gemäß einer vorteilhaften Weiterbildung ist der Aktuator mit einem dem Turbolader zugewandten Endabschnitt, insbesondere bis zur radialen Stufe hin, in der Ausnehmung aufgenommen. Auf diese Weise wird verhindert, dass sich der Aktuator nach Relaxation des Aktuatorgehäuses quer zur axialen Richtung bewegen kann.

Die Erfindung betrifft ferner eine Brennkraftmaschine mit mehreren Zylindern und mit einer Abgasanlage zum Abführen von Abgas aus den Zylindern. Die Brennkraftmaschine umfasst auch eine vorangehend vorgestellte, erfindungsgemäße Abgasturbolader-Anordnung. Die voranstehend genannten Vorteile der Abgasturbolader-Anordnung übertragen sich daher auch auf die erfindungsgemäße Brennkraftmaschine.

Die Erfindung betrifft auch ein Kraftfahrzeug mit einer solchen Brennkraftmaschine, so dass sich die vorangehend erläuterten Vorteile der Abgasturbolader-Anordnung auch auf das erfindungsgemäße Kraftfahrzeug übertragen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch:
- Fig. 1: ein Beispiel einer erfindungsgemäßen Abgasturbolader-Anordnung,
- Fig. 2: eine Detaildarstellung der Abgasturbolader-Anordnung der Figur 1 im Bereich einer Schraubverbindung zwischen Turboladergehäuse und Aktuatorgehäuse,
- Fig. 3: eine Variante des Beispiels der Figuren 1 und 2,
- Fig. 4: eine Weiterbildung des Beispiels der Figur 3.

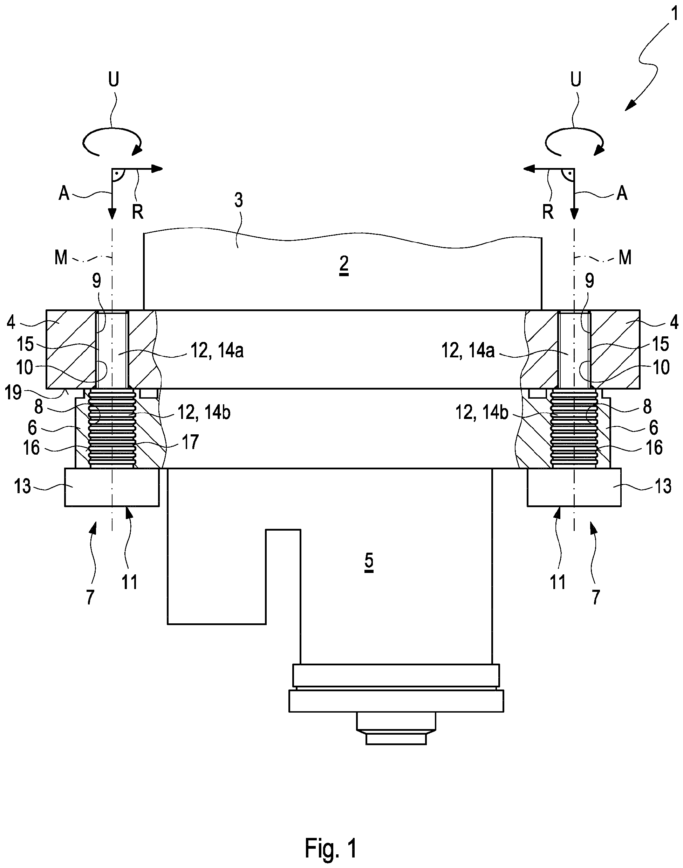

Figur 1 zeigt ein Beispiel einer erfindungsgemäßen Abgasturbolader-Anordnung 1. Die Abgasturbolader-Anordnung 1 umfasst einen Abgasturbolader 2, der in bekannter Weise einem einen Verdichter und eine Turbine aufweist. Der Abgasturbolader 2 umfasst ferner ein Turboladergehäuse 3 mit einem Gehäuseflansch 4. Das Turboladergehäuse 3 kann ein jeweils bekanntes Verdichtergehäuse, ein Turbinengehäuse sowie ein Lagergehäuse des Abgasturboladers 2 sein oder umfassen. Die Abgasturbolader-Anordnung 1 umfasst einen Aktuator 5 zum Verstellen einer variablen Turbinengeometrien oder/und einer Wastegate-Einrichtung der Turbine. Der Aktuator 5 umfasst ferner ein Aktuatorgehäuse 6. Das Aktuatorgehäuse 6 ist mittels mehrerer Schraubverbindungen 7, die Teil der Abgasturbolader-Anordnung 1 sind, lösbar am Gehäuseflansch 4 des Turboladergehäuses 3 befestigt.

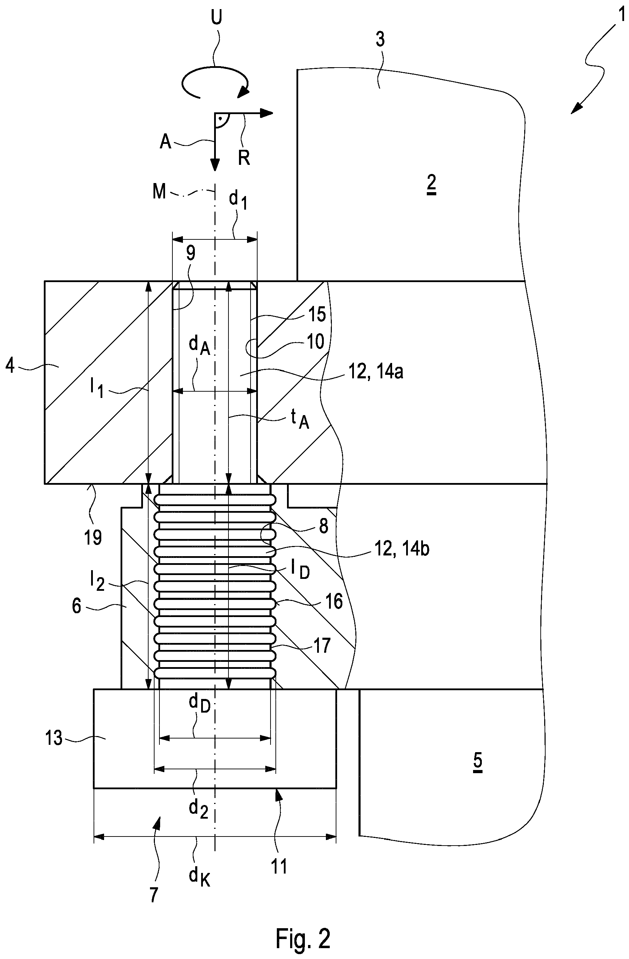

Figur 2 zeigt die Abgasturbolader-Anordnung 1 der Figur 1 in einer Detaildarstellung im Bereich einer solchen Schraubverbindung 7. Die Schraubverbindung 7 umfasst demnach eine im Aktuatorgehäuse 6 vorgesehene Durchgangsöffnung 8, die durch das Kunststoffmaterial des Aktuatorgehäuses 6 begrenzt ist. Die Schraubverbindung 7 umfasst auch eine im Gehäuseflansch 4 vorgesehen Ausnehmung 9, welche umfangsseitig von einem Innengewinde 10 aus Metall begrenzt ist. Die Schraubverbindung 7 umfasst des Weiteren eine Passschraube 11, die einen Schraubenkörper 12 aufweist, der entlang einer axialen Richtung A des Schraubenkörpers 12 in einen Schraubenkopf 13 übergeht.

Die axiale Richtung A wird dabei durch die Ausrichtung einer Mittellängsachse M des Schraubenkörpers 12 im montierten Zustand der Passschraube 11 festgelegt, d.h. die Mittellängsachse erstreckt sich in diesem Zustand der Passschraube 11 in der axialen Richtung A. Eine radiale Richtung R erstreckt sich senkrecht von der Mittellängsachse M weg. Eine Umfangsrichtung U erstreckt sich senkrecht sowohl zur axialen Richtung A als auch zur radialen Richtung R und läuft um die Mittellängsachse M um.

Wie Figur 2 erkennen lässt, weist der Schraubenkörper 12 einen axial vom Schraubenkopf 13 abgewandten ersten axialen Körperabschnitt 14a mit einem komplementär zum Innengewinde 10 der Ausnehmung 9 ausgebildeten Außengewinde 15 auf. Axial zwischen dem Schraubenkopf 13 und dem ersten axialen Körperabschnitt 14a ist ein zweiter axialer Körperabschnitt 14b angeordnet. Ein erster Körperabschnittsdurchmesser d₁ des ersten Körperabschnitts 14a ist kleiner als ein zweiter Körperabschnittsdurchmesser d₂ des zweiten Körperabschnitts 14b. Ein Kopfdurchmesser d_{K} des Schraubenkopfs 13 ist größer als der zweite Körperabschnittsdurchmesser d₂.

In dem in Figuren 1 und 2 gezeigten zusammengebauten Zustand der Abgasturbolader-Anordnung 1 durchgreift die Passschraube 11 die Durchgangsöffnung 8 des Aktuatorgehäuses 6 mit dem ersten Körperabschnitt 14a. Mit dem Außengewinde 15 des zweiten Körperabschnitts 14b greift die Passschraube 11 in das Innengewinde der Ausnehmung 9 ein, so dass das Aktuatorgehäuse 6 zwischen dem Gehäuseflansch 4 des Turboladergehäuses 3 und den Schraubenkopf 13 der Passschraube geklemmt ist.

Wie Figur 2 veranschaulicht, ist der zweite Körperabschnittsdurchmesser d₂ größer als ein Ausnehmungsdurchmesser d_{A} der Ausnehmung 9. Weiterhin ist der Kopfdurchmesser d_{K} größer als ein Öffnungsdurchmesser d_{D} der Durchgangsöffnung 8.

Eine erste Abschnittslänge l₁ des ersten Körperabschnitts 14a ist dabei kleiner als eine entlang der axialen Richtung A gemessene Ausnehmungstiefe t_{A} der Ausnehmung 9.

Eine zweite Abschnittslänge l₂ des zweiten Körperabschnitts 14b weist dabei zweckmäßig einen Wert auf, der höchstens so groß ist wie der Wert eine Durchgangsöffnungslänge l_{D} der Durchgangsöffnung 8. Beispielsweise kann die Durchgangsöffnungslänge l_{D} 12mm oder mehr betragen. Besonders zweckmäßig ist der Wert der zweiten Abschnittslänge l₂ um höchstens 0,3 mm, vorzugsweise um höchstens 0,1 mm kleiner als der Wert der Durchgangsöffnungslänge l_{D}. Der zweite Körperabschnitt 14b der Passschraube 11 bildet mit dem die Durchgangsöffnung 8 des Aktuatorgehäuses 6 umfangsseitig begrenzenden Kunststoffmaterial eine Presspassung 17 aus. Am Außenumfang 16 des zweiten Körperabschnitts 14b kann zur Ausbildung der Presspassung 17 eine Rippenstruktur vorgesehen sein. Bevorzugt umfasst eine solche Rippenstruktur mehreren sich axial erstreckenden Längsrippen, oder auch eine tribulare Struktur.

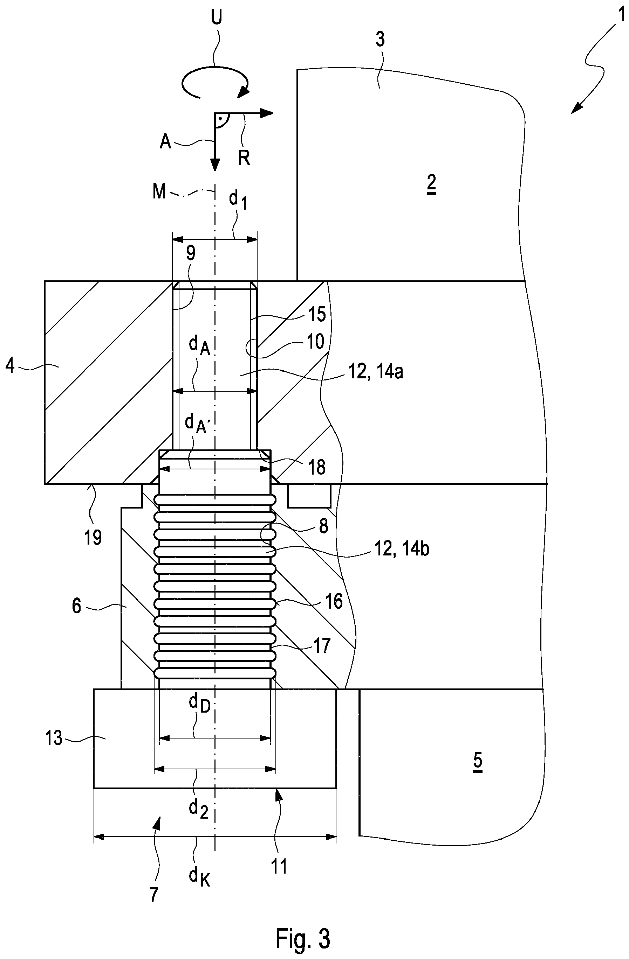

Figur 3 zeigt eine Weiterbildung des Beispiels der Figuren 1 und 2. Im Beispiel der Figur 3 weist die im Gehäuseflansch 4 vorgesehene Ausnehmung 9 eine radiale Stufe auf, so dass der Durchmesser d_{A} der Ausnehmung 9 zur Oberfläche 19 des Gehäuseflansches 4 hin vergrößert ist. Der vergrößerte Durchmesser der Ausnehmung 9 ist in Figur 3 mit d_{A}' bezeichnet. Somit wird die mittels der Presspassung 17 zwischen Aktuatorgehäuse 6 und Passschraube 11 bewirkte Positioniergenauigkeit senkrecht zur axialen Richtung A auf das Turboladergehäuse 3 übertragen.

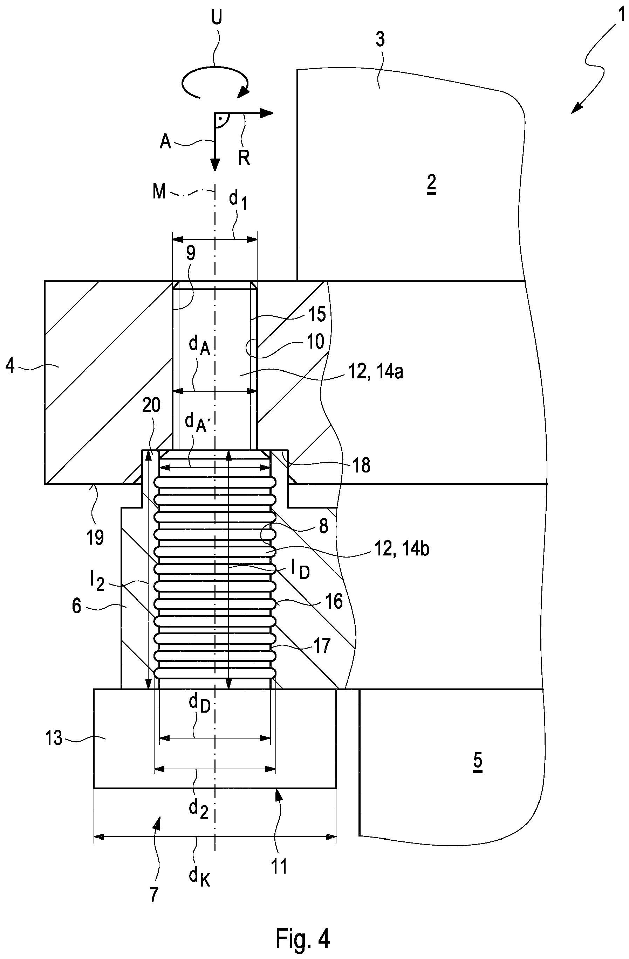

In einer in Figur 4 gezeigten Weiterbildung des Beispiels der Figur 3 ist das Aktuatorgehäuse 6 des Aktuators 5 mit einem dem Turbolader 2 zugewandten Endabschnitt 20, der auch einen dem Turbolader 2 zugewandten Endabschnitt der Durchgangsöffnung 8 umfasst, insbesondere bis zur radialen Stufe 18 hin, in der Ausnehmung 9 aufgenommen.

Auf diese Weise wird verhindert, dass sich der Aktuator 5 nach Relaxation des Aktuatorgehäuses 6 quer zur axialen Richtung A bewegen kann.

## Patentansprüche

1. Abgasturbolader-Anordnung (1),
- mit einem einen Verdichter und eine Turbine umfassenden Abgasturbolader (2), der ein Turboladergehäuse (3) aufweist,
- mit einem ein Aktuatorgehäuse (6) umfassenden Aktuator (5) zum Verstellen einer variablen Turbinengeometrien oder/und einer Wastegate-Einrichtung der Turbine,
- mit wenigstens einer Schraubverbindung (7) zum lösbaren Befestigen des Aktuatorgehäuses (6) an einem Gehäuseflansch (4) des Turboladergehäuses (3), wobei die wenigstens eine Schraubverbindung (7) umfasst:
- eine im Aktuatorgehäuse (6) vorgesehene Durchgangsöffnung (8), die durch Kunststoffmaterial des Aktuatorgehäuses (6) begrenzt ist,
- eine im Gehäuseflansch (4) vorgesehen Ausnehmung (9), welche umfangsseitig von einem Innengewinde (10) aus einem Metall begrenzt ist,
- eine Passschraube (11), die einen Schraubenkörper (12) aufweist, der axial in einen Schraubenkopf (13) übergeht,
- wobei der Schraubenkörper (12) einen axial vom Schraubenkopf (13) abgewandten ersten axialen Körperabschnitt (14a) mit einem komplementär zum Innengewinde der Ausnehmung (9) ausgebildeten Außengewinde (15) und einen axial zwischen dem Schraubenkopf (13) und dem ersten Körperabschnitt (14a) angeordneten zweiten axialen Körperabschnitt (14b) aufweist,
wobei ein erster Körperabschnittsdurchmesser (d₁) des ersten Körperabschnitts (14a) kleiner ist als ein zweiter Körperabschnittsdurchmesser (d₂) des zweiten Körperabschnitts (14b) und ein Kopfdurchmesser (d_{K}) des Schraubenkopfs (13) größer ist als der zweite Körperabschnittsdurchmesser (d₂),
- wobei die Passschraube (11) die Durchgangsöffnung (8) des Aktuatorgehäuses (6) mit dem zweiten Körperabschnitt (14b) durchgreift und mit dem Außengewinde (15) des ersten Körperabschnitts (14a) in das Innengewinde (10) der Ausnehmung (9) eingreift, so dass das Aktuatorgehäuse (6) zwischen dem Gehäuseflansch (4) des Turboladergehäuses (3) und den Schraubenkopf (13) der Passschraube (11) geklemmt ist, und
- wobei der zweite Körperabschnitt (14b) der Passschraube (11) mit dem die Durchgangsöffnung (8) des Aktuatorgehäuses (6) umfangsseitig begrenzenden Kunststoffmaterial eine Presspassung (17) ausbildet.

2. Abgasturbolader-Anordnung nach Anspruch 1,
**dadurch gekennzeichnet, dass**
eine zweite Abschnittslänge (l₂) des zweiten Körperabschnitts (14b) einen Wert aufweist, der höchstens so groß ist wie der Wert einer Durchgangsöffnungslänge (l_{D}) der Durchgangsöffnung (8).

3. Abgasturbolader-Anordnung nach Anspruch 1 oder 2,
**dadurch gekennzeichnet, dass**
der Wert der zweiten Abschnittslänge (l₂) um höchstens 0,3, vorzugsweise um höchstens 0,1 mm, kleiner ist als der Wert der Durchgangsöffnungslänge (l_{D}).

4. Abgasturbolader-Anordnung nach einem der vorhergehenden Ansprüche,
**dadurch gekennzeichnet, dass**
am Außenumfang (16) des zweiten Körperabschnitts (14b) zur Ausbildung der Presspassung (17) eine Rippenstruktur (18), vorzugsweise mit mehreren sich axial erstreckenden Längsrippen, oder eine tribulare Struktur, ausgebildet ist.

5. Abgasturbolader-Anordnung nach einem der vorhergehenden Ansprüche,
**dadurch gekennzeichnet, dass**
der zweite Körperabschnittsdurchmesser (d₂) größer ist als ein Ausnehmungsdurchmesser (d_{A}) der Ausnehmung (9).

6. Abgasturbolader-Anordnung nach einem der vorhergehenden Ansprüche,
**dadurch gekennzeichnet, dass**
der Kopfdurchmesser (d_{K}) größer ist als ein Öffnungsdurchmesser (d_{D}) der Durchgangsöffnung (8).

7. Abgasturbolader-Anordnung nach einem der vorhergehenden Ansprüche,
**dadurch gekennzeichnet, dass**
die Ausnehmung (9) eine radiale Stufe (18) aufweist, so dass der Durchmesser (d_{A}) der Ausnehmung (9) zur Oberfläche (19) des Gehäuseflansches (4) hin vergrößert ist.

8. Abgasturbolader-Anordnung nach einem der vorhergehenden Ansprüche,
**dadurch gekennzeichnet, dass**
der Aktuator (5), insbesondere das Aktuatorgehäuse (6), mit einem dem Turbolader zugewandten Endabschnitt (20), insbesondere bis zur radialen Stufe (18) hin, in der Ausnehmung (9) aufgenommen ist.

9. Brennkraftmaschine,
- mit mehreren Zylindern und mit einer Abgasanlage zum Abführen von Abgas aus den Zylindern,
- mit einer Abgasturbolader-Anordnung (1) nach einem der vorhergehenden Ansprüche.

10. Kraftfahrzeug mit einer Brennkraftmaschine nach Anspruch 9.

## Claims

1. Exhaust gas turbo-charger arrangement (1),
- having an exhaust gas turbo-charger (2) comprising a compactor and a turbine, which has a turbo-charger housing (3),
- having an actuator (5) comprising an actuator housing (6) for adjusting a variable turbine geometry apparatus and/or a waste gate apparatus of the turbine,
- having at least one screw connection (7) for the releasable fastening of the actuator housing (6) to a housing flange (4) of the turbocharger housing (3), wherein the at least one screw connection (7) comprises:
- a through-opening (8) provided in the actuator housing (6), which is delimited by plastic material of the actuator housing (6),
- a cutout (9) provided in the housing flange (4), which is delimited on the peripheral side by an inner threading (10) made of a metal,
- a fitted bolt (11) which has a screw body (12) which transitions axially into a screw head (13),
- wherein the screw body (12) has a first axial body portion (14a), facing away from the screw head (13), having an outer threading (15) formed so as to be complementary to the inner threading of the cutout (9), and a second axial body portion (14b) arranged axially between the screw head (13) and the first body portion (14a),
wherein a first body portion diameter (d₁) of the first body portion (14a) is smaller than a second body portion diameter (d₂) of the second body portion (14b) and a head diameter (d_{K}) of the screw head (13) is greater than the second body portion diameter (d₂),
- wherein the fitted bolt (11) passes through the through-opening (8) of the actuator housing (6) with the second body portion (14b) and engages with the outer threading (15) of the first body portion (14a) into the inner threading (10) of the cutout (9), such that the actuator housing (6) is clamped between the housing flange (4) of the turbocharger housing (3) and the screw head (13) of the fitted bolt (11), and
- wherein the second body portion (14b) of the fitted bolt (11) forms an interference fit (17) with the plastic material delimiting the through-opening (8) of the actuator housing (6) on the peripheral side.

2. Exhaust gas turbo-charger arrangement according to claim 1,
**characterised in that**
a second portion length (l₂) of the second body portion (14b) has a value which is at most as great as the value of a through-opening length (l_{D}) of the through-opening (8).

3. Exhaust gas turbo-charger arrangement according to claim 1 or 2,
**characterised in that**
the value of the second portion length (l₂) is smaller by at most 0.3 mm, preferably by at most 0.1 mm, than the value of the through-opening length (l_{D}).

4. Exhaust gas turbo-charger arrangement according to any of the preceding claims, **characterised in that**
on the outer periphery (16) of the second body portion (14b) is formed a rib structure (18), preferably having several longitudinal ribs extending axially, or a tribular structure, for forming the interference fit (17).

5. Exhaust gas turbo-charger arrangement according to any of the preceding claims, **characterised in that**
the second body portion diameter (d₂) is greater than a cutout diameter (d_{A}) of the cutout (9).

6. Exhaust gas turbo-charger arrangement according to any of the preceding claims, **characterised in that**
the head diameter (d_{K}) is greater than an opening diameter (d_{D}) of the through-opening (8).

7. Exhaust gas turbo-charger arrangement according to any of the preceding claims, **characterised in that**
the cutout (9) has a radial step (18) such that the diameter (d_{A}) of the cutout (9) is enlarged surface (19) of the housing flange (4).

8. Exhaust gas turbo-charger arrangement according to any of the preceding claims, **characterised in that**
the actuator (5), in particular the actuator housing (6), is accommodated in the cutout (9) with an end portion (20) facing the turbo-charger, in particular as far as the radial step (18).

9. Internal combustion engine
- having several cylinders and with an exhaust gas arrangement for discharging exhaust gas from cylinders,
- having an exhaust gas turbo-charger arrangement (1) according to any of the preceding claims.

10. Motor vehicle having an internal combustion engine according to claim 9.

## Revendications

1. Agencement de turbocompresseur à gaz d'échappement (1),
- avec un turbocompresseur à gaz d'échappement (2) comprenant un compresseur et une turbine, qui présente un boîtier de turbocompresseur (3),
- avec un actionneur (5) comprenant un boîtier d'actionneur (6) pour le réglage d'une géométrie de turbine variable ou/et d'un dispositif de soupape de décharge de la turbine,
- avec au moins un raccord à vis (7) pour fixer de manière amovible le boîtier d'actionneur (6) à une bride de boîtier (4) du boîtier de turbocompresseur (3), dans lequel l'au moins un raccord à vis (7) comprend :
- une ouverture de passage (8) prévue dans le boîtier d'actionneur (6), qui est délimitée par le matériau plastique du boîtier d'actionneur (6),
- un évidement (9) prévu dans la bride de boîtier (4), lequel est délimité sur sa périphérie par un filetage intérieur (10) en un métal,
- une vis d'ajustage (11) qui présente un corps de vis (12) qui se transforme axialement en une tête de vis (13),
- dans lequel le corps de vis (12) présente une première section de corps axiale (14a) opposée axialement à la tête de vis (13) avec un filetage extérieur (15) réalisé de manière complémentaire au filetage intérieur de l'évidement (9) et une seconde section de corps axiale (14b) disposée axialement entre la tête de vis (13) et la première section de corps (14a),
dans lequel un premier diamètre de section de corps (d₁) de la première section de corps (14a) est inférieur à un second diamètre de section de corps (d₂) de la seconde section de corps (14b) et un diamètre de tête (d_{K}) de la tête de vis (13) est supérieur au second diamètre de section de corps (d₂),
- dans lequel la vis d'ajustement (11) traverse l'ouverture de passage (8) du boîtier d'actionneur (6) avec la seconde section de corps (14b) et s'engage avec le filetage extérieur (15) de la première section de corps (14a) dans le filetage intérieur (10) de l'évidement (9), de sorte que le boîtier d'actionneur (6) est serré entre la bride de boîtier (4) du boîtier de turbocompresseur (3) et la tête de vis (13) de la vis d'ajustement (11), et
- dans lequel la seconde section de corps (14b) de la vis d'ajustement (11) forme un ajustement serré (17) avec la matière plastique délimitant l'ouverture de passage (8) du boîtier d'actionneur (6) sur la périphérie.

2. Agencement de turbocompresseur à gaz d'échappement selon la revendication 1,
**caractérisé en ce que**
une seconde longueur de section (l₂) de la seconde section de corps (14b) présente une valeur qui est au plus aussi grande que la valeur d'une longueur d'ouverture de passage (l_{D}) de l'ouverture de passage (8).

3. Agencement de turbocompresseur à gaz d'échappement selon la revendication 1 ou 2,
**caractérisé en ce que**
la valeur de la seconde longueur de section (l₂) est inférieure d'au plus 0,3, de préférence d'au plus 0,1 mm, à la valeur de la longueur d'ouverture de passage (l_{D}).

4. Agencement de turbocompresseur à gaz d'échappement selon l'une quelconque des revendications précédentes, **caractérisé en ce que**
une structure nervurée (18), de préférence avec plusieurs nervures longitudinales s'étendant axialement, ou une structure tribulaire, est formée sur la périphérie extérieure (16) de la seconde section de corps (14b) pour former l'ajustement serré (17).

5. Agencement de turbocompresseur à gaz d'échappement selon l'une quelconque des revendications précédentes, **caractérisé en ce que**
le second diamètre de section de corps (d₂) est supérieur à un diamètre d'évidement (d_{A}) de l'évidement (9).

6. Agencement de turbocompresseur à gaz d'échappement selon l'une quelconque des revendications précédentes, **caractérisé en ce que**
le diamètre de tête (d_{K}) est supérieur à un diamètre d'ouverture (d_{D}) de l'ouverture de passage (8).

7. Agencement de turbocompresseur à gaz d'échappement selon l'une quelconque des revendications précédentes, **caractérisé en ce que**
l'évidement (9) présente un gradin radial (18), de sorte que le diamètre (d_{A}) de l'évidement (9) est agrandi vers la surface (19) de la bride de boîtier (4).

8. Agencement de turbocompresseur à gaz d'échappement selon l'une quelconque des revendications précédentes, **caractérisé en ce que**
l'actionneur (5), en particulier le boîtier d'actionneur (6), est reçu dans l'évidement (9) avec une section d'extrémité (20) tournée vers le turbocompresseur, en particulier jusqu'à l'étage radial (18).

9. Moteur à combustion interne,
- avec plusieurs cylindres et avec un système d'échappement pour évacuer les gaz d'échappement des cylindres,
- avec un agencement de turbocompresseur à gaz d'échappement (1) selon l'une quelconque des revendications précédentes.

10. Véhicule automobile avec un moteur à combustion interne selon la revendication 9.
